# EUROPEAN PATENT APPLICATION

(11) **EP 2 439 740 A1**
(43) Date of publication of application: **11.04.2012**
(21) Application number: 11164546.1
(22) Date of filing: 03.05.2011
(51) Int. Cl.: G11B 27/034, G11B 27/32, G11B 27/36

(54) **Information processing apparatus and information processing method**

(30) Priority: 07.10.2010 JP 2010227883
(71) Applicant: Kabushiki Kaisha Toshiba, Tokyo 105-8001 (JP)
(72) Inventor: Kobayashi, Naomiki, Tokyo 105-8001 (JP); Iwahara, Hiroki, Tokyo 105-8001 (JP); Sato, Jun, Tokyo 105-8001 (JP)
(74) Representative: HOFFMANN EITLE

(57) **Abstract**

According to one embodiment, an information processing apparatus includes a reader (209), a selector (209), and a transmitter (209). The reader is configured to read write performance information from a first information storage medium. The selector is configured to select a part or all of at least one content from at least one content stored in a second information storage medium based on the write performance information. The transmitter is configured to transmit the selected part or all of the at least one content to the first information storage medium.

## Description

Embodiments described herein relate generally to an information processing apparatus and an information processing method.

In recent years, recording and reproducing apparatuses have been increasingly multifunctional, and recording and reproducing apparatus with various functions have appeared. For example, a recently appeared recording and reproducing apparatus is equipped with a high-capacity storage device such as a hard disk and a slot for portable media. This recording and reproducing apparatus can write programs stored in the high-capacity storage device, to the portable medium such as an SD (registered trade mark) memory card inserted into the slot. That is, the recording and reproducing apparatus can dub programs stored in the high-capacity storage device to the portable medium.

Thus, a user can carry the programs written to the portable media. For example, the user can utilize a portable player compatible with portable media to view the programs written to the portable medium outside the home or the like.

When a long-time program is written to a portable medium, a long time is required for the write. For example, when the user is busy before going out and desires to carry the program when going out, then unexpectedly long time may be required to write the program to the portable medium. Techniques have been proposed which prevent such unexpectedly long time from being required for the write.

For example, for portable media such as SD media cards, the level of write performance and the write time required for write vary depending on the type of the medium. That is, even if programs with the same data size are written to portable media, the write time varies depending on the write target medium. Thus, the user may feel stress during a write wait time during which the user waits for the write to complete and avoid using the dubbing function of the above-described recording and reproducing apparatus.

A general architecture that implements the various features of the embodiments will now be described with reference to the drawings. The drawings and the associated descriptions are provided to illustrate the embodiments and not to limit the scope of the invention.

FIG. 1 is a diagram illustrating a data write process carried out by a data recording apparatus (information processing apparatus) according to a first embodiment to a fourth embodiment;

FIG. 2 is a diagram showing an example of a general configuration of the data recording apparatus according to the first embodiment to the fourth embodiment;

FIG. 3 is a flowchart illustrating an example of a write process according to the second embodiment;

FIG. 4 is a diagram illustrating an example of a database in which results of detection (measurement results) of a data write speed are recorded for each portable medium (for each ID unique to a corresponding apparatus);

FIG. 5 is a flowchart illustrating an example of a write process according to the third embodiment;

FIG. 6 is a flowchart illustrating an example of a write process according to the fourth embodiment; and

FIG. 7 is a diagram illustrating an example of a list of dubbing target candidate programs.

Various embodiments will be described hereinafter with reference to the accompanying drawings.

In general, according to one embodiment, an information processing apparatus includes a reader, a selector, and a transmitter. The reader is configured to read write performance information from a first information storage medium. The selector is configured to select a part or all of at least one content from at least one content stored in a second information storage medium based on the write performance information. The transmitter is configured to transmit the selected part or all of the at least one content to the first information storage medium.

A first embodiment to a fourth embodiment will be described below with reference to the drawings.

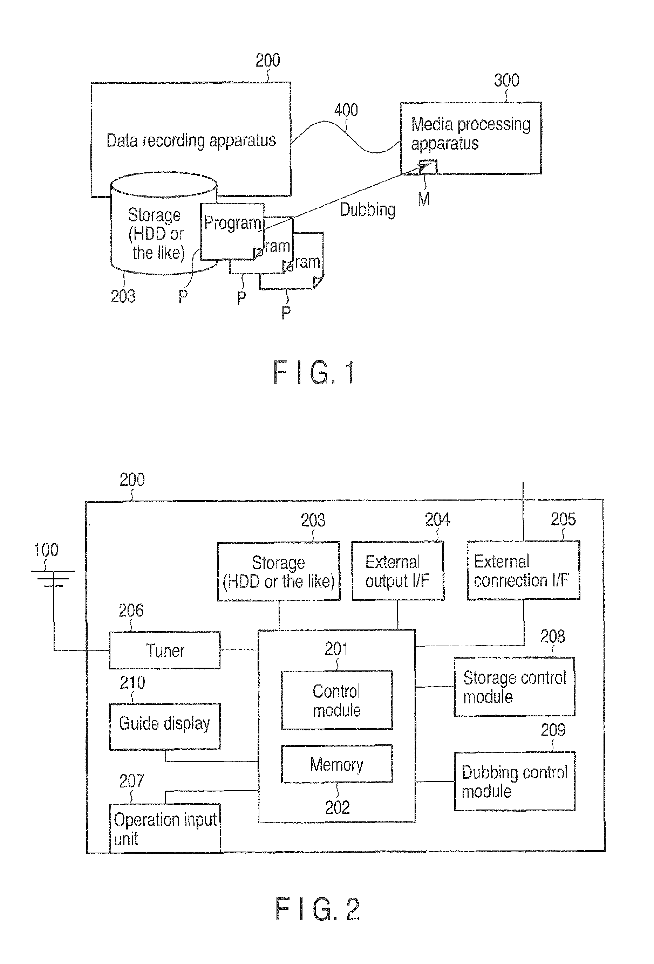

FIG. 1 is a diagram illustrating an example of a data write process carried out by a data recording apparatus (information processing apparatus) according to the first embodiment to the fourth embodiment. Furthermore, FIG. 2 is a diagram showing an example of a general configuration of the data recording apparatus common to the first embodiment to the fourth embodiment.

As illustrated in FIG. 1 and FIG. 2, a data recording apparatus 200 comprises a control module 201, a memory 202, a storage 203 such as a hard disk drive, an external output interface 204, an external connection interface 205, a tuner 206, an operation input module 207, a recording control module 208, a dubbing control module 209, and a guide display 210.

The data recording apparatus 200 is applicable to, for example, a digital video recorder (DVR). Furthermore, the data recording apparatus 200 is applicable to, for example, a digital TV (DTV) with a program recording function.

The data recording apparatus 200 can receive signals for terrestrial digital broadcasting via an antenna 100 or the like, record a program P (program data or content data) using a storage 203, output the program P (program data or content data) to an external display apparatus via the external output interface 204, and output the program P (program data or content data) to an external reproducing apparatus via the external connection interface 205.

The control module 201 carries out various arithmetic processes for a program recording process based on signals for terrestrial digital broadcasting received by the antenna 100 and a program write process (dubbing process) for writing programs to an external medium. Furthermore, the memory 202 is configured to store various data for the program recording process and the program write process.

The recording control module 208 controls a process for recording programs subjected to signal processing by the tuner 206, for example, to allow the programs to be saved to the storage 203. For example, the dubbing control module 209 transfers a part or all of at least one program saved to the storage 203, to a media processing apparatus 300. The dubbing control module 209 thus carries out a process (dubbing process) for writing the part or all of the data of the at least one program to the media processing apparatus 30.

As illustrated in FIG. 1, the data recording apparatus 200 is configured to be connectable to the media processing apparatus 300 via the external connection interface 205 and a cable 400. The media processing apparatus 300 comprises a media slot in which a portable medium M such as an SD memory card can be installed. The media processing apparatus 300 can write a part or all of the data of the programs transferred by the data recording apparatus 200, to the portable medium M installed in the media slot.

In the first to fourth embodiments, a case will be described in which the media processing apparatus 300 configured independently of the data recording apparatus 200 writes write data to the portable medium M. However, the first to fourth embodiments are not limited to this case but include the following case. For example, the data recording apparatus 200 comprises the configuration of the media processing apparatus 300. The media processing apparatus 300, a partial configuration of the data recording apparatus 200, writes the write data to the portable medium M.

The above-described data recording apparatus 200 can select a part or all of at least one program from the at least one program stored in the storage 203 and write the selected part or all of the at least one program to the portable medium M installed in the media processing apparatus 300. That is, the data recording apparatus 200 can dub some or all of the at least one program to the portable medium M.

A program write process (dubbing process) will be described in connection with each of the first to fourth embodiments.

### (First Embodiment)

In the first embodiment, an example of a write process based on write performance information on the portable medium M will be described.

The dubbing control module 209 (reader) of the data recording apparatus 200 reads the write performance information from the portable medium M via the external connection interface 205 to detect the speed at which data is written to the portable medium M. Based on the write performance information (write speed), the dubbing control module 209 (selector and transmitter) selects a part or all of at least one program (content) from the at least one program (content) stored in the storage 203. The dubbing control module 209 then transfers the selected part or all of the at least one program to the media processing apparatus 300. The media processing apparatus 300 writes the transferred part or all of the at least one program to the portable medium M.

For example, the dubbing control module 209 of the data recording apparatus 200 detects a first data size corresponding to the size of data that can be written within a predetermined time based on the write performance (write speed) of the portable medium M. Subsequently, the guide display 210 provides guidance indicating that a first data size of data can be written within the predetermined time. Moreover, the dubbing control module 209 selects a part or all of at least one program from the storage 203 such that the total data size of the selected part or all of the at least one program is equal to or smaller than the first data size. The dubbing control module 209 then transfers the selected part or all of at least one program to the media processing apparatus 300. The media processing apparatus 300 writes the transferred part or all of the at least one program to the portable medium M. The above-described predetermined time is, for example, an initialization time and can be changed via the operation input module 210.

Alternatively, if the detected write speed is higher than a reference speed, the dubbing control module 209 of the data recording apparatus 200 selects a part or all of at least one high-priority program such that the total data size of the selected part or all of the at least one program is equal to or smaller than the first data size. The dubbing control module 209 then transfers the selected part or all of at least one program to the media processing apparatus 300. If the detected write speed is equal to or lower than the reference speed, the dubbing control module 209 selects a part or all of at least one high-priority program such that the total data size of the selected part or all of the at least one program is equal to or smaller than a second data size that is smaller than the first data size. The dubbing control module 209 then transfers the selected part or all of at least one program to the media processing apparatus 300.

Here, the above-described priority will be described in a supplementary manner. For example, the dubbing control module 209 assigns priorities to the programs based on the recording dates and times of the programs. For example, the dubbing control module 209 assigns higher priorities to newer programs. Alternatively, the following process is possible. The control module 201 collects history of reproduction and recording of the programs and analyzes the user's preference based on the history. Then, the dubbing control module 209 assigns priorities to the programs based on the results of analysis of the preference.

In selecting at least two programs, the dubbing control module 209 can prevent selection of a part of each program and the following write of the part of the content to the portable medium M. That is, the dubbing control module 209 can prevent all selected programs from being written to the portable medium M in a halfway manner. For example, halfway writes can be prevented as follows.

In selecting N (N: integer, N≥ 2) programs, the dubbing control module 209 selects all of (N-1) programs and selects a part or all of the remaining one program. The dubbing control module 209 then transfers all of the (N-1) programs to the media processing apparatus 300 (portable medium M) and transfers the part or all of the remaining one program to the media processing apparatus 300 (portable medium M).

For example, it is assumed that 5G-byte data can be written within the predetermined time and that a first program, a second program, and a third program all have a data size of 2 Gbytes. In this case, for example, the dubbing control module 209 selects all of the first and second programs (2 Gbytes x 2) and selects a part of the third program (1 Gbyte). The dubbing control module 209 then transfers all of the first and second programs (2 Gbytes x 2) to the media processing apparatus 300 (portable medium M), and transfers the part of the third program (1 Gbyte) to the media processing apparatus 300 (portable media M).

Alternatively, it is assumed that that 5G-byte data can be written within the predetermined time and that both the first program and the second program have a data size of 2 Gbytes, whereas the third program has a data size of 1 Gbyte. In this case, for example, the dubbing control module 209 selects all of the first, second, and third programs (2 Gbytes x 2 + 1 Gbyte). The dubbing control module 209 then transfers all of the first, second, and third programs (2 Gbytes x 2 + 1 Gbyte) to the media processing apparatus 300 (portable medium M).

Alternatively, the dubbing control module 209 may select at least one program from the storage 203 (not a part but all of the program is selected) such that the data size of the program is equal to or smaller than a first data size corresponding to the size of data that can be written within the predetermined time. The dubbing control module 209 may then output the selected at least one program as a list of dubbing target candidate programs. For example, the dubbing control module 209 can output the list of dubbing target candidate programs to an external display apparatus via the external output interface 204.

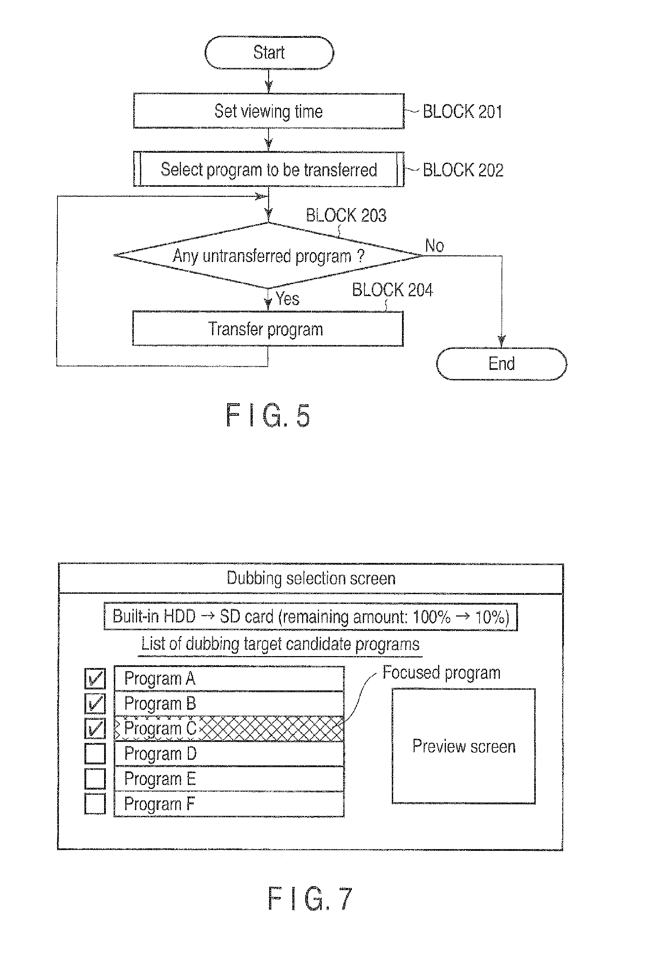

FIG. 7 is a diagram showing an example of the list of dubbing target candidate programs. The user may select all the programs (programs A, B, C, D, E, and F) in the list of dubbing target candidate programs and instructs the media processing apparatus to dub all the selected programs. Alternatively, the user may select at least one program (for example, the programs A, B, and C) in the list of dubbing target candidate programs and instructs the media processing apparatus to dub the selected at least one program. In either case, the selected programs are completely dubbed within the predetermined time. Furthermore, in either case, not a part but all of each of the selected programs is dubbed. Additionally, the remaining amount of the portable medium M (SD memory card) is variably displayed in response to the selection of the programs.

Alternatively, the dubbing control module 209 may output a list of programs each with a data size equal to or smaller than the first data size. That is, the data size of each of the programs in the program list is equal to or smaller than the first data size. Thus, whichever single program in the list is selected, the selected single program can be completely dubbed within the predetermined time. Furthermore, not a part but all of the selected single program is dubbed.

As described above, the data recording apparatus 200 can complete a data write process within a given time regardless of the write performance of the portable medium M. This enables a reduction in the user's stress attributed to the write wait time.

### (Second Embodiment)

In the second embodiment, an example of a write process based on a set dubbing limitation time (write permission time) and the write performance information on the portable medium M.

For example, the user can input the dubbing limitation time (write wait time) via the operation input unit 207. For example, if the user can provide five minutes of write wait time while the user is busy before going out, the user inputs a dubbing limitation time of five minutes via the operation input unit 207.

The operation input unit 207 notifies the dubbing control module 209 of the input dubbing limitation time (the operation input unit 207 sets the input dubbing limitation time in the dubbing control module 209). The dubbing control module 209 of the data recording apparatus 200 reads the write performance information from the portable medium M via the external connection interface 205 to detect the speed at which data is written to the portable medium M. Based on the dubbing limitation time and the write performance information (write speed), the dubbing control module 209 selects a part or all of at least one program from the at least one program stored in the storage 203. The dubbing control module 209 then transfers the selected part or all of the at least one program to the media processing apparatus 300. The media processing apparatus 300 writes the data of the transferred part or all of the at least one program to the portable medium M.

For example, the dubbing control module 209 of the data recording apparatus 200 detects a first data size corresponding to the size of data that can be written within the predetermined time based on the write performance of the portable medium M. Subsequently, the guide display 210 provides guidance indicating that a first data size of data can be written within the predetermined time. Moreover, the dubbing control module 209 selects a part or all of at least one program from the storage 203 such that the total data size of the selected part or all of the at least one program is equal to or smaller than the first data size. The dubbing control module 209 then transfers the selected part or all of at least one program to the media processing apparatus 300. The media processing apparatus 300 writes the transferred part or all of the at least one program to the portable medium M. The above-described predetermined time is, for example, an initialization time and can be changed via the operation input module 210.

In selecting at least two programs, the dubbing control module 209 can prevent selection of a part of each program and the following write of the part of the content to the portable medium M. That is, the dubbing control module 209 can prevent all selected programs from being written to the portable medium M in a halfway manner. For example, halfway writes can be prevented as follows.

In selecting N (N: integer, N ≥ 2) programs, the dubbing control module 209 selects all of (N-1) programs and selects a part or all of the remaining one program. The dubbing control module 209 then transfers all of the (N-1) programs to the media processing apparatus 300 (portable medium M) and transfers the part or all of the remaining one program to the media processing apparatus 300 (portable medium M).

Alternatively, the dubbing control module 209 may select at least one program from the storage 203 (not a part but all of the program is selected) such that the data size of the program is equal to or smaller than a first data size corresponding to the size of data that can be written within the dubbing limitation time. The dubbing control module 209 may then output the selected at least one program as a list of dubbing target candidate programs. For example, the dubbing control module 209 can output the list of dubbing target candidate programs to an external display apparatus via the external output interface 204.

FIG. 7 is a diagram showing an example of the list of dubbing target candidate programs. The user may perform the following operations via the operation input module 207. That is, the user may select all the programs (programs A, B, C, D, E, and F) in the list of dubbing target candidate programs and instructs the media processing apparatus to dub all the selected programs. Alternatively, the user may select at least one program (for example, the programs A, B, and C) in the list of dubbing target candidate programs and instructs the media processing apparatus to dub the selected at least one program. In either case, the selected programs are completely dubbed within the predetermined time. Furthermore, in either case, not a part but all of each of the selected programs is dubbed. Additionally, the remaining amount of the portable medium M (SD memory card) is variably displayed in response to the selection of the programs.

Alternatively, the dubbing control module 209 may output a list of programs each with a data size equal to or smaller than the first data size. That is, the data size of each of the programs in the program list is equal to or smaller than the first data size. Thus, whichever single program in the list is selected, the selected single program is completely dubbed within the dubbing limitation time. Furthermore, not a part but all of the selected single program is dubbed.

That is, the data recording apparatus 200 can complete a data write process within the dubbing limitation time regardless of the write performance of the portable medium M. This enables a reduction in the user's stress attributed to the write wait time.

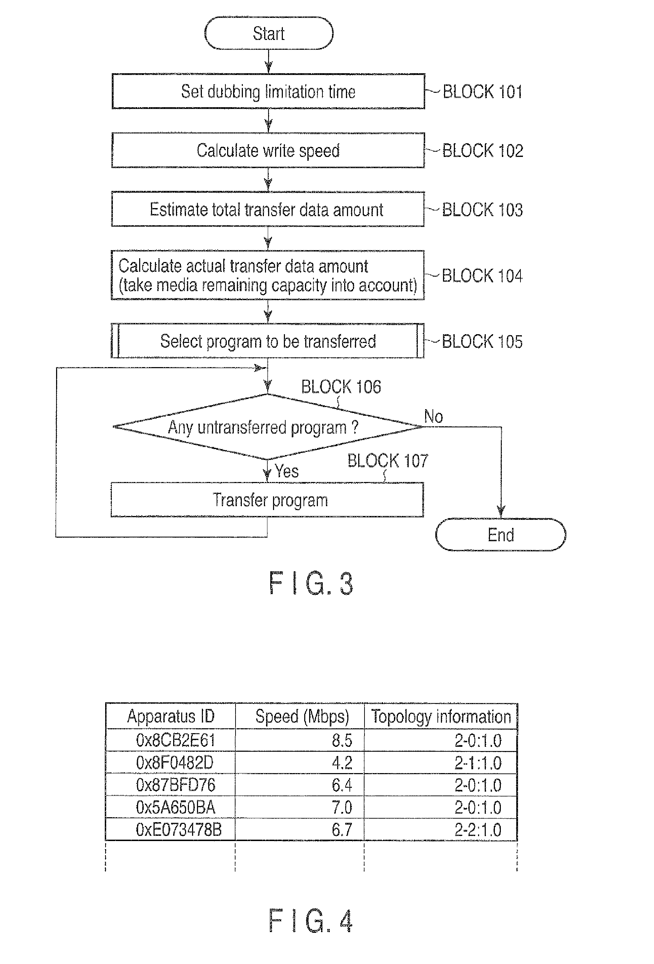

FIG. 3 is a flowchart illustrating a write process according to the second embodiment. As shown in FIG. 3, first, the operation input unit 207 notifies the dubbing control module 209 of the input dubbing limitation time (write permission time) (the operation input unit 207 sets the input dubbing limitation time in the dubbing control module 209) (BLOCK 101).

The present embodiment is not limited to the method of setting the dubbing limitation time via the operation input unit 207. For example, it is assumed that the media processing apparatus 300 is a mobile phone or a smartphone and comprises a schedule application with a schedule for outings and the like registered therein. The schedule application can detect a connection to the data recording apparatus 200 and compare the current time with the time to go out. The schedule application can further calculate the dubbing limitation time from the difference between the current time and the outing time and notify (set) the data recording apparatus 200 of the dubbing limitation time.

Subsequently, the dubbing control module 209 detects, via the external connection interface 205, the speed at which data is written to the portable medium M (BLOCK 102).

To avoid depending on the type of the portable medium M, for example, the dubbing control module 209 can actually write data to the portable medium M and detect (measure) the speed at which data is written to the portable medium M. Moreover, as illustrated in FIG. 4, the dubbing control module 209 can hold a database in which the results of detection (measurement results) of the data write speed are recorded for each portable medium (for each ID unique to a corresponding apparatus). For example, the dubbing control module 209 can record the database in the storage 203. Topology information relating to the measured data write speed and connections to apparatuses can be saved to the database in association with the IDs unique to the apparatuses. Thus, the dubbing control module 209 can detect the speed at which data is written to the portable medium M based on the database and the ID of the portable medium M without the need to actually write data to the portable medium M for each process.

Furthermore, when the portable medium M is an SD memory card, the dubbing control module 209 can carry out the following process. The dubbing control module 209 issues a SEND_STATUS command to the portable medium M to acquire a status register from the portable medium M. The dibbing control module 209 then detects the write speed based on a speed class (write performance information) contained in the status register. The speed class is a value at which the minimum write speed is ensured for a NAND memory. When the dubbing control module 209 (dubbing control application) detects the write speed, the detection is carried out with overhead of an FAT file system. For example, the average write speed is formulated as follows.

### <Expression 1>

### (Average write speed) = (Speed Class) × α (0<α<1)

Subsequently, the dubbing control module 209 estimates the amount of data (data size) that can be transferred within the dubbing limitation time from the set dubbing limitation time and the measured value of the write speed (BLOCK 103). The amount of data that can be transferred can be formulated as follows.

### <Expression 2>

(Amount of data that can be transferred) = (Average write speed) × (Dubbing limitation time)

However, if the remaining capacity of the portable medium M is smaller than the amount of data that can be transferred which is calculated in the above-described expression, the dubbing control module 209 sets the amount of data that can be transferred equal to the remaining capacity (BLOCK 104).

The dubbing control module 209 selects a part or all of at least one program from the at least one program stored in the storage 203 within the range of the amount of data that can be transferred (BLOCK 105). For example, the dubbing control module 209 assigns priorities to the programs based on the recording date and time of each program. The dubbing control module 209 preferentially selects high-priority programs. For example, assigning higher priorities to newer programs allows the newer programs to be preferentially selected.

Alternatively, the dubbing control module 209 may select the minimum number of programs within the range of the amount of data that can be transferred. Alternatively, the dubbing control apparatus 209 may select the maximum number of programs within the range of the amount of data that can be transferred. Alternatively, the following process is possible. The control module 201 collects history of reproduction and recording of the programs and analyzes the user's preference based on the history. Then, the dubbing control module 209 assigns priorities to the programs based on the results of analysis of the preference to preferentially select higher-priority programs.

Subsequently, the dubbing control module 209 transfers the selected part or all of the at least one program to the media processing apparatus 300 (portable medium M) (BLOCK 106 and BLOCK 107). The media processing apparatus 300 then writes the transferred part or all of the at least one program to the portable medium M.

### (Third Embodiment)

In the third embodiment, an example of a write process based on a set viewing time (reproduction time) will be described. FIG. 5 is a flowchart illustrating an example of a write process according to the third embodiment.

For example, the user can input a viewing time via the operation input unit 207. For example, if the user can provide 90 minutes of viewing time outside the home, the user inputs a viewing time of 90 minutes via the operation input unit 207.

The operation input unit 207 (setting module) notifies the dubbing control module 209 of the input viewing time (the operation input unit 207 sets the input viewing time in the dubbing control module 209) (BLOCK 201). The dubbing control module 209 of the data recording apparatus 200 selects a part or all of at least one program from the at least one program stored in the storage 203 based on the viewing time (BLOCK 202). The dubbing control module 209 then transfers the selected part or all of the at least one program to the media processing apparatus 300 (BLOCK 203 and BLOCK 204). The media processing apparatus 300 writes the data of the transferred part or all of the at least one program to the portable medium M.

Alternatively, the dubbing control module 209 may select at least one program from the storage 203 (not a part but all of the program is selected) such that the time required to reproduce the program is equal to or shorter than the viewing time. The dubbing control module 209 may then output the selected at least one program as a list of dubbing target candidate programs. For example, the dubbing control module 209 can output the list of dubbing target candidate programs to an external display apparatus via the external output interface 204.

FIG. 7 is a diagram showing an example of the list of dubbing target candidate programs. The user may perform the following operations via the operation input module 207. The user may select all the programs (programs A, B, C, D, E, and F) in the list of dubbing target candidate programs and instructs the media processing apparatus to dub all the selected programs. Alternatively, the user may select at least one program (for example, the programs A, B, and C) in the list of dubbing target candidate programs and instructs the media processing apparatus to dub the selected at least one program. In either case, the dubbed at least one program can be viewed within the viewing time. Furthermore, in either case, not a part but all of each of the selected programs is dubbed. Additionally, the remaining amount of the portable medium M (SD memory card) is variably displayed in response to the selection of the programs.

Alternatively, the dubbing control module 209 may output a list of programs each with a reproduction time equal to or shorter than the viewing time. That is, the time required to reproduce each of the programs in the program list is equal to or shorter than the viewing time. Namely, any one of the programs in the program list can be viewed within the viewing time. Furthermore, not a part but all of the selected single program is dubbed.

Alternatively, the dubbing control module 209 reads the write performance information from the portable medium M via the external connection interface 205 to detect the speed at which data is written to the portable medium M. Based on the viewing time and the write performance information (write speed), the dubbing control module 209 selects a part or all of at least one program from the at least one program stored in the storage 203. The dubbing control module 209 then transfers the selected part or all of the at least one program to the media processing apparatus 300. The media processing apparatus 300 writes the data of the transferred part or all of the at least one program to the portable medium M.

For example, based on setting of a second viewing time longer than a first viewing time and on write performance information indicative of second write performance higher than first write performance, the dubbing control module 209 selects a part or all of at least one program corresponding to a set second reproduction time. The dubbing control module 209 then transfers the selected part or all of the at least one program to the media processing apparatus 300. That is, if the set reproduction time is long and the write performance is high, the dubbing control module 209 directly selects the part or all of the at least one program corresponding to the long-time reproduction. The dubbing control module 209 then transfers the selected part or all of the at least one program to the media processing apparatus 300.

Unlike in the case of the above-description, based on setting of the second reproduction time and on write performance information indicative of the first write performance, the dubbing control module 209 selects a part or all of at least one program corresponding to a first reproduction time. The dubbing control module 209 then transfers the selected part or all of the at least one program to the media processing apparatus 300. That is, if the set reproduction time is long but the write performance is low, then instead of directly selecting the part or all of the at least one program corresponding to the long-time reproduction, the dubbing control module 209 selects a part or all of at least one program corresponding to a time shorter than the set long-time reproduction. The dubbing control module 209 then transfers the selected part or all of the at least one program to the media processing apparatus 300.

As described above, the data recording apparatus 200 enables a reduction in the user's stress attributed to the write wait time.

### (Fourth Embodiment)

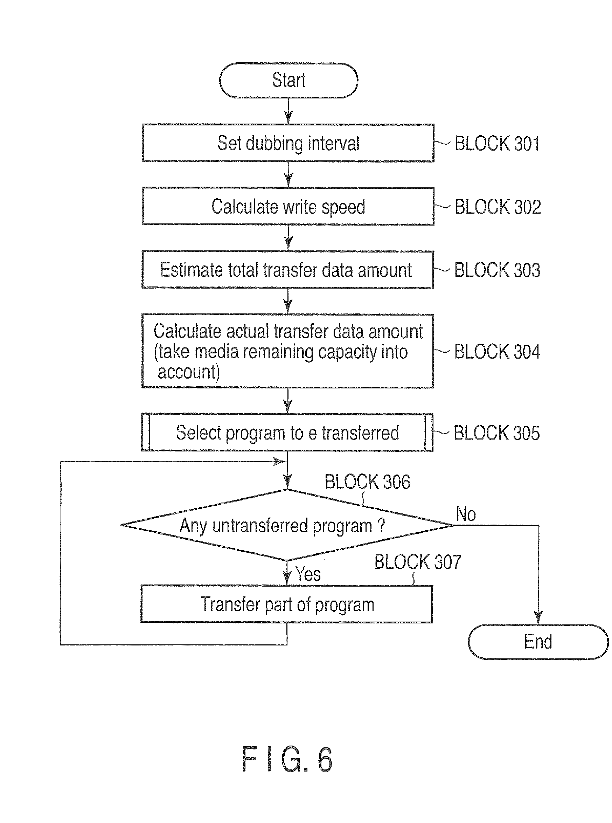

In the fourth embodiment, an example of a write process based on a set dubbing interval and the write performance information on the portable medium M will be described. FIG. 6 is a flowchart illustrating an example of the write process according to the fourth embodiment.

For example, the user can input the dubbing interval via the operation input unit 207. For example, when the user desires to view a partial interval of each program outside the home which interval corresponds to five minutes from the head of the program, the user inputs a dubbing interval of five minutes from the head of the program, via the operation input unit 207.

The operation input unit 207 notifies the dubbing control module 209 of the input dubbing interval (the operation input unit 207 sets the input dubbing interval in the dubbing control module 209) (BLOCK 301). The dubbing control module 209 of the data recording apparatus 200 reads the write performance information from the portable medium M via the external connection interface 205 to detect the write speed (BLOCK 302). Based on the dubbing interval and the write performance information (write speed), the control module 209 selects a part (dubbing interval) of at least one program from the at least one program stored in the storage 203. The dubbing control module 209 then transfers the selected part (dubbing interval) of the at least one program to the media processing apparatus 300. The media processing apparatus 300 writes the data of the transferred part (dubbing interval) of the at least one program to the portable medium M.

For example, the dubbing control module 209 of the data recording apparatus 200 detects a first data size corresponding to the size of data that can be written to the portable medium M within the predetermined time based on the write performance of the portable medium M. Subsequently, the guide display 210 provides guidance indicating that a first data size of data can be written within the predetermined time. Moreover, the dubbing control module 209 selects a part (dubbing interval) of at least one program from the storage 203 such that the total data size of the selected part (dubbing interval) of the at least one program is equal to or smaller than the first data size. The dubbing control module 209 then transfers the selected part (dubbing interval) of at least one program to the media processing apparatus 300. The media processing apparatus 300 writes the transferred part (dubbing interval) of the at least one program to the portable medium M.

As described above, the data recording apparatus 200 can complete the data write process within a given time regardless of the write performance of the portable medium M. This enables a reduction in the user's stress attributed to the write wait time.

Alternatively, the user can input the dubbing interval and a dubbing limitation time via the operation input unit 207. For example, when the user desires to view a partial interval of each program outside the home which interval corresponds to five minutes from the head of the program and if the user can provide five minutes of write wait time while the user is busy before going out, the user inputs a dubbing interval of five minutes from the head of the program and a dubbing limitation time of five minutes via the operation input unit 207.

The operation input unit 207 notifies the dubbing control module 209 of the input dubbing interval and dubbing limitation time (the operation input unit 207 sets the input dubbing interval and dubbing limitation time in the dubbing control module 209). The dubbing control module 209 of the data recording apparatus 200 reads the write performance information from the portable medium M via the external connection interface 205 to detect the write speed. Based on the dubbing interval, the dubbing limitation time, and the write performance information (write speed), the control module 209 selects a part (dubbing interval) of at least one program from the at least one program stored in the storage 203. The dubbing control module 209 then transfers the selected part (dubbing interval) of the at least one program to the media processing apparatus 300. The media processing apparatus 300 writes the data of the transferred part (dubbing interval) of the at least one program to the portable medium M.

For example, the dubbing control module 209 of the data recording apparatus 200 detects a first data size corresponding to the size of data that can be written to the portable medium M within the dubbing limitation time based on the write performance of the portable medium M. Subsequently, the guide display 210 provides guidance indicating that a first data size of data can be written within the dubbing limitation time. Moreover, the dubbing control module 209 selects a part (dubbing interval) of at least one program from the storage 203 such that the total data size of the selected part (dubbing interval) of the at least one program is equal to or smaller than the first data size. The dubbing control module 209 then transfers the selected part (dubbing interval) of at least one program to the media processing apparatus 300. The media processing apparatus 300 writes the transferred part (dubbing interval) of the at least one program to the portable medium M.

As described above, the data recording apparatus 200 can complete the data write process within a given time regardless of the write performance of the portable medium M. This enables a reduction in the user's stress attributed to the write wait time.

Alternatively, the user can input the dubbing interval and a viewing time (reproduction) via the operation input unit 207. For example, when the user desires to view a partial interval of each program outside the home which interval corresponds to five minutes from the head of the program and if the user can provide 60 minutes of viewing time outside the home, the user inputs a dubbing interval of five minutes from the head of the program and a viewing time of 60 minutes via the operation input unit 207.

The operation input unit 207 notifies the dubbing control module 209 of the input dubbing interval and viewing time (the operation input unit 207 sets the input dubbing interval and viewing time in the dubbing control module 209). Based on the dubbing interval and the viewing time, the dubbing control module 209 selects a part (dubbing interval) of at least one program from the at least one program stored in the storage 203. The dubbing control module 209 then transfers the selected part (dubbing interval) of at least one program to the media processing apparatus 300. The media processing apparatus 300 writes the transferred part (dubbing interval) of the at least one program to the portable medium M.

For example, if the dubbing interval of five minutes from the head of the program and the viewing time of 60 minutes are input to the dubbing control module 209, the dubbing control module 209 selects a part of each of 12 programs (five minutes of dubbing interval x 12) and then transfers the selected parts of the 12 programs to the media processing apparatus 300.

In the case described in the fourth embodiment, the data recording apparatus 200 extracts and transfers the data in the dubbing interval of a predetermined time (for example, five minutes) from the head of each program. However, for example, the data recording apparatus 200 may extract and transfer partial data of each program which corresponds to a second time (for example 10 seconds), at first time intervals (for example, five minutes). This enables a digest of each program to be viewed.

The above-described at least one embodiment can provide an information processing apparatus and an information processing method which are excellent in reducing the user's stress attributed to the write time.

The various modules of the embodiments described herein can be implemented as software applications, hardware and/or software modules, or components on one or more computers, such as servers. While the various modules are illustrated separately, they may share some or all of the same underlying logic or code.

## Claims

1. An information processing apparatus **characterized by** comprising:
a reader (209) configured to read write performance information from a first information storage medium;
a selector (209) configured to select a part or all of at least one content from at least one content stored in a second information storage medium based on the write performance information; and
a transmitter (209) configured to transmit the selected part or all of the at least one content to the first information storage medium.

2. The apparatus of Claim 1, **characterized by** further comprising:
a setting module (207) configured to set a write permission time, and
**characterized in that** the selector is configured to select a part or all of at least one content from the second information storage medium based on the write permission time and the write performance information.

3. The apparatus of Claim 2, **characterized in that** the selector is configured to detect a first data size corresponding to a size of data written within the write permission time based on the write permission time and the write performance information, and to select a part or all of at least one content from the second information storage medium such that a total data size of the selected part or all of the at least one content is equal to or smaller than the first data size.

4. The apparatus of Claim 3, **characterized in that** the selector is configured in such a manner that when selecting at least two contents, the selector selects all of at least one content of the at least two contents excluding one content, while selecting a part or all of the remaining one content.

5. The apparatus of Claim 1, 2, or 3, **characterized in that** the setting module is configured to set a partial interval during which the selected at least one content is written,
the selector is configured to select the partial interval of the at least one content from the second information storage medium in such a manner that a second data size corresponding to a total of the selected partial interval of the at least one content is equal to or smaller than the first data size, and
the transmitter is configured to transmit the selected partial interval of the at least one content to the first information storage medium.

6. The apparatus of Claim 1, **characterized by** further comprising:
a setting module (207) configured to set a content reproduction time, and
**characterized in that** the selector is configured to select a part or all of at least one content from the second information storage medium based on the reproduction time and the write performance information.

7. The apparatus of Claim 6, **characterized in that** the selector is configured in such a manner that based on setting of a second reproduction time longer than a first reproduction time and the write performance information indicative of second write performance higher than first write performance, the selector selects a part or all of at least one content corresponding to the second reproduction time, from the second information storage medium, and
the selector is also configured in such a manner that based on setting of the second reproduction time and the write performance information indicative of the first write performance, the selector selects a part or all of at least one content corresponding to the first reproduction time, from the second information storage medium.

8. The apparatus of Claim 6 or 7, **characterized in that** the setting module is configured to set a partial interval during which the selected at least one content is written,
the selector is configured to select the partial interval of the at least one content from the second information storage medium in such a manner that a second data size corresponding to a total of the selected partial interval of the at least one content is equal to or smaller than the first data size, and
the transmitter is configured to transmit the selected partial interval of the at least one content to the first information storage medium.

9. An information processing method **characterized by** comprising:
reading write performance information from a first information storage medium;
selecting a part or all of at least one content from at least one content stored in a second information storage medium based on the write performance information; and
transmitting the selected part or all of the at least one content to the first information storage medium.
